# EUROPEAN PATENT APPLICATION

(11) **EP 4 534 361 A1**
(43) Date of publication of application: **09.04.2025**
(21) Application number: 23827332.0
(22) Date of filing: 31.03.2023
(51) Int. Cl.: B60R 21/207, B60R 21/233, B60R 21/2338, B60N 2/42, B60R 21/235, B60R 21/00, B60R 21/01

(54) **VEHICLE AIRBAG DEVICE**

(30) Priority: 22.06.2022 KR 20220076216; 02.09.2022 KR 20220111337
(71) Applicant: Autoliv Development AB, 44783 Vargarda (SE)
(72) Inventor: JUNG, Yong Hyun, Hwaseong-si, Gyeonggi-do 18497 (KR); LEE, Seung Jin, Hwaseong-si, Gyeonggi-do 18497 (KR); JANG, Dong Hyun, Hwaseong-si, Gyeonggi-do 18497 (KR)
(74) Representative: Feucker, Max Martin
(86) International application number: PCT/KR2023/004348
(87) International publication number: WO 2023/249212

(57) **Abstract**

Provided is an airbag device for a vehicle. The airbag device includes a housing installed in a backrest of a seat, an inflator configured to generate a gas upon ignition by a detection signal of an impact detection sensor in the event of a vehicle collision, and an airbag cushion accommodated in the housing in a rolled or folded state to receive the gas generated from the inflator upon the vehicle collision, thereby being inflated and deployed to surround an upper body and a head of an occupant. The airbag cushion may be inflated and deployed from the backrest toward a rear surface of the occupant to compensate a distance between the occupant and the backrest upon the vehicle collision, thereby preventing the occupant, who is rebounded by a frontal airbag, from being injured due to collision with the backrest.

## Description

### Technical Field

The present disclosure relates to an airbag device for a vehicle, and more particularly, to an airbag device for a vehicle which restrains and protects a passenger by being inflated and deployed upon vehicle collision.

### Background Art

A vehicular airbag device is a safety device that protects a passenger by injecting gas into an airbag according to a signal of an impact detection sensor upon vehicle collision, and rapidly inflating the airbag.

Such an airbag device is installed in a steering wheel, a dashboard, a seat, a sidewall, etc. provided in a vehicle, and protects an occupant by being inflated toward a front side or a side of the occupant upon vehicle collision.

That is, a vehicle may be provided with a frontal airbag which is deployed in front of a driver seat and a passenger seat, a curtain airbag and a side airbag, which are both deployed from a side chamber of a passenger to protect the passenger, and a knee airbag for protecting passenger's knees, etc.

Recently, autonomous vehicles that can drive themselves without the need for a driver are being developed.

The autonomous vehicle detects a condition of each device provided in the vehicle and a condition around the vehicle, by using a high-tech sensor for recognizing things around the vehicle and a high-performance graphic processing device, and travels while controlling an operation of each device provided in the vehicle according to a result of detecting.

The high-tech sensor may measure a distance between things like a human being, and may detect a danger and help the vehicle view all areas without a blind zone. In addition, the graphic processing device may grasp a surrounding environment of the vehicle through several cameras, and may analyze an image thereof and help the vehicle safely travel.

For example, the autonomous vehicle may have a LiDAR device, a sound wave device, a 3D camera, a radar device, etc. mounted therein.

As the autonomous vehicles configured as described above do not require drivers to drive, all seats including a driver seat can freely rotate and an angle of a backrest can be adjusted to be horizontal by a tilting operation.

A passenger can adjust the angle of the backrest variously, and may rotate the seat and may have a meeting facing a passenger on a back seat.

Accordingly, it is impossible to apply a normal airbag apparatus which is designed with reference to a posture of a passenger sitting on a seat facing forward to the autonomous vehicles.

Patent document 1 and patent document 2 presented below disclose a passenger protection system configuration for a vehicle.

As a passenger riding in an autonomous vehicle does not directly drive, the passenger may have a meeting by swiveling a seat in a horizontal direction while moving to a destination, or may have a rest by reclining a backrest backward.

As the seat and the backrest can be freely swiveled in the autonomous vehicle, a direction and a posture of the passenger can be variously changed.

Accordingly, there is a demand for airbag technology for safely protecting a passenger regardless of a direction and a posture of the passenger upon vehicle collision.

Particularly, in the case of a frontal collision in not only autonomous vehicles but also conventional vehicles where the occupant has rotated the backrest backward, a frontal airbag device is deployed toward the front of the occupant to protect the occupant.

However, after the occupant collides with the frontal airbag, the occupant is rebounded due to the airbag and move backward again, colliding with other parts of the vehicle, such as the seat's backrest or headrest.

As a result, the airbag device for a vehicle according to related art may cause injury to the occupant who is rebounded by the airbag.

Also, when the occupant rotates the backrest backward, as a space between the frontal airbag device and the occupant increases, which may result in the frontal airbag device alone being unable to effectively restrain and protect the occupant.

Therefore, there is a need for the development of a technology that can safely protect an occupant by compensating for the space between the occupant who is rebounded after colliding with the airbag, especially the occupant who is in a state of having rotated the backrest backward, and the frontal airbag device.
(Patent Document 1) Korean Patent Registration No. 10-1655569 (published on September 08, 2016)
(Patent Document 2) Korean Patent Registration No. 10-1611087 (published on April 11, 2016)

### Disclosure of Invention

### Technical Problem

An object of the present invention is to solve the problems as described above, and is to provide an airbag device for a vehicle which may safely protect an occupant who is rebounded by a frontal airbag which is inflated and deployed in front of the occupant upon a vehicle collision.

Another object of the present invention is to provide an airbag device for a vehicle which may compensate for a space between an occupant and a frontal airbag device to safely protect the occupant.

Further another object of the present invention is to provide an airbag device for vehicle which may safely restrain and protect an occupant by inflating and deploying in front of the occupant, along both sides as well as behind of the occupant.

### Solution to Problem

To achieve an object as described above, an airbag device for a vehicle according to the present invention includes: a housing installed in a backrest of a seat; an inflator configured to generate a gas upon ignition by a detection signal of an impact detection sensor in the event of a vehicle collision; and an airbag cushion accommodated in the housing in a rolled or folded state to receive the gas generated from the inflator upon the vehicle collision, thereby being inflated and deployed to surround an upper body and a head of an occupant, wherein the airbag cushion compensates a distance between the occupant and the backrest upon the vehicle collision and is inflated and deployed from the backrest toward a rear surface of the occupant so as to prevent the occupant, who is rebounded by a frontal airbag, from being injured due to collision with the backrest.

### Advantageous Effects of Invention

As described above, according to the airbag device for the vehicle in the present invention, the occupant may be safely protected by compensating for the space between the occupant and the frontal airbag device, reducing the space upon the vehicle collision.

In addition, according to the present invention, the impact, which occurs when the occupant is rebounded by the frontal airbag inflated and deployed in front of the occupant and collides with the seat, may be effectively absorbed to safely protect the occupant.

Moreover, according to the present invention, the top surface and both side surfaces of the occupant's head may be restrained by the upper chamber, which is inflated around the head of the occupant, to safely protect the occupant.

### Brief Description of Drawings

FIG. 1 is a perspective view of an airbag device for a vehicle according to a first embodiment of the present invention;
FIG. 2 is an exploded view of an airbag cushion shown in FIG.1;
FIGS. 3 to 5 are a perspective view, a front view, and a side view, respectively, illustrating a state in which the airbag cushion shown in FIG. 1 is inflated and deployed;
FIG. 6 is an operational state view illustrating a state in which the airbag device for the vehicle is operated according to a preferred embodiment of the present invention;
FIG. 7 is an exploded view of an airbag cushion applied to an airbag device for a vehicle according to a second embodiment of the present invention;
FIGS. 8 to 10 are a perspective view, a front view, and a side view, respectively, illustrating a state in which the airbag cushion shown in FIG. 7 is inflated and deployed; and
FIG. 11 is an operational state view illustrating a state in which the airbag device for the vehicle is operated according to the second embodiment of the present invention.

### Best Mode for Carrying out the Invention

Hereinafter, an airbag apparatus for a vehicle according to preferred embodiments of the present disclosure will be described in detail with reference to the accompanying drawings.

Although the operation is explained using the configuration of an airbag system applied to an autonomous vehicle in autonomous driving mode in this embodiment, it should be noted that the present invention is not limited thereto and can also be applied to manual driving mode when the driver operates the vehicle, as well as in conventional vehicles with existing airbag cushions.

In this embodiment, the configuration installed in the backrest of the passenger seat of a conventional vehicle is explained, however, it should be noted that the present invention can be applied not only to the driver's seat but also to the rear seats.

Hereinafter, a direction toward the front of the vehicle from a driver's seat will be referred to as forward,' and a direction toward the rear of the vehicle from the driver's seat will be referred to as 'backward.' Along with these terms, terms indicating directions such as 'left side,' 'right side,' 'upward direction,' and 'downward direction' are defined to indicate respective directions with reference to the forward direction and the backward direction described above.

### [First Embodiment]

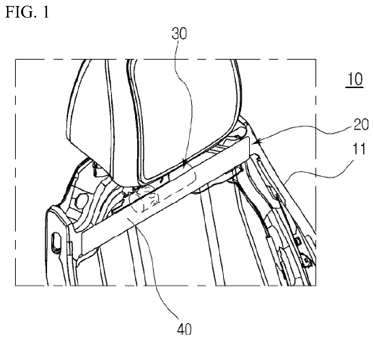

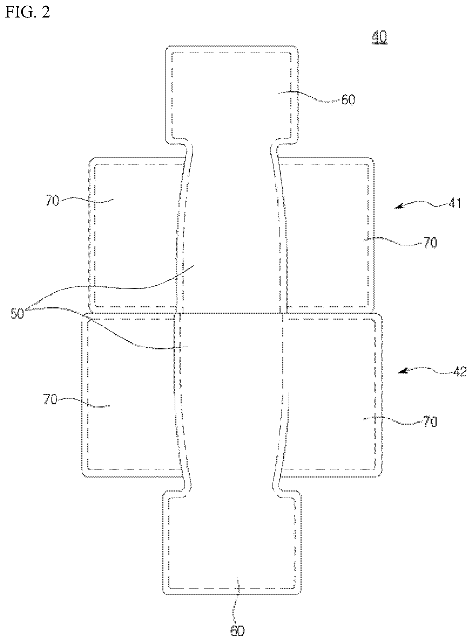

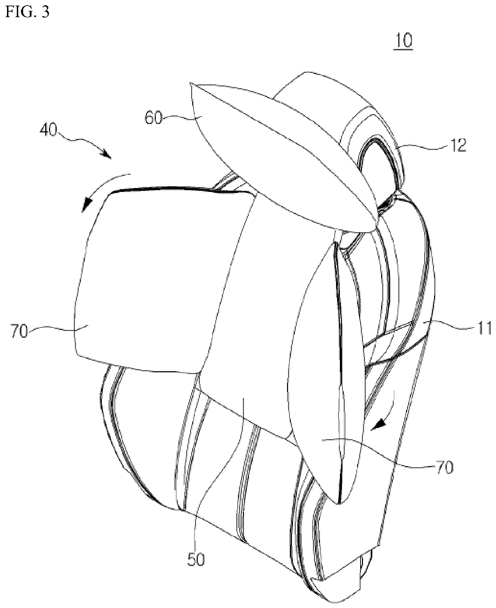

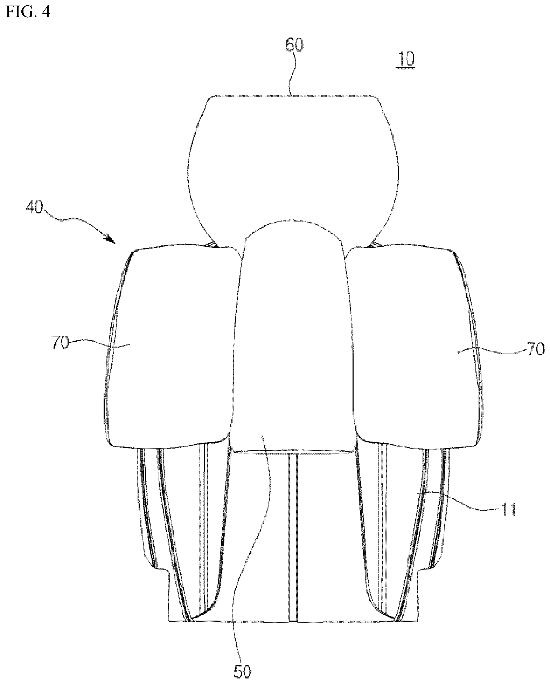

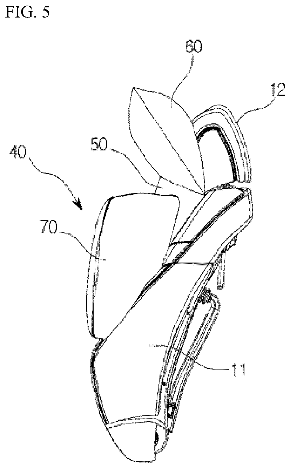

FIG. 1 is a perspective view of an airbag device for a vehicle according to a first embodiment of the present invention, FIG. 2 is an exploded view of an airbag cushion shown in FIG.1, and FIGS. 3 to 5 are a perspective view, a front view, and a side view, respectively, illustrating a state in which the airbag cushion shown in FIG. 1 is inflated and deployed.

As shown in FIG. 1, an airbag device 10 for a vehicle according to the present invention is installed in a seat of the vehicle and inflated and deployed toward a rear surface of an occupant who is rebounded after colliding with a frontal airbag.

Accordingly, according to the present invention, the occupant who is rebounded after colliding with the frontal airbag may be protected from injury due to a collision with devices inside the vehicle, such as a backrest 11 of the seat.

In addition, according to the present invention, a space between the frontal airbag and the occupant may be compensated to be reduced in a state in which the occupant rotates the backrest backward, effectively restraining and safely protecting the occupant.

In detail, as shown in FIG. 1, the airbag device 10 for the vehicle according to a first embodiment of the present invention includes a housing 20 installed on the backrest 11 of the seat, an inflater 30 that generates a gas upon ignition by a detection signal of an impact detection sensor in the event of a vehicle collision, and an airbag cushion 40 accommodated in the housing 20 in a rolled or folded state to receive the gas generated from the inflator 30 and inflated and deployed to surround an upper body and a head portion of the occupant.

The housing 20 may have an approximately rectangular prism shape and be accommodated in an upper end of an inner space of the backrest 11.

A cutting line may be defined in a front surface of the backrest 11 so that the airbag cushion 40 is inflated and deployed toward the occupant.

The inflater 30 may be accommodated in a rear internal space of the housing 20 to generate the gas upon ignition according to the detection signal of the impact detection sensor installed in the vehicle.

As shown in FIGS. 2 to 5, the airbag cushion 40 may include a main chamber 50 which is inflated and deployed toward rear surfaces of a neck and the upper body of the occupant and an upper chamber 60 which is inflated and deployed toward the rear surface of the head of the occupant, so that the head and the upper body of the occupant is surrounded and protected.

Also, the airbag cushion 40 may further include a pair of side chambers 70 which are inflated and deployed toward both sides of the upper body of the occupant to prevent the occupant from lateral movement.

Accordingly, a space in which the upper body including the head, neck and the back of the occupant is entirely accommodated may be defined inside the inflated and deployed airbag cushion 40.

The airbag cushion 40 may include an inner panel 41, which is in contact with the occupant and an external panel 42, which is in contact with the opposite side of the inner panel 41, specifically, the backrest 11, during inflation and deployment.

As shown in FIG. 2, the inner panel 41 and the external panel 42 may be provided as a single interconnected panel and have a bag shape through sewing or bonding along edges while being overlapped with each other, or a one-piece woven method.

For this purpose, the inner panel 41 and the external panel 42 may have a symmetric shape.

However, in the main chamber 50 area, the external panel 42 may have a longer length in at least one of the horizontal or vertical dimensions than the inner panel 41 so that the external panel 42 surrounds the back of the occupant when the main chamber 50 is inflated and deployed.

The main chamber 50 may have a vertical length corresponding to the neck and back of the occupant. That is, the main chamber 50 may be inflated and deployed on the neck and back of the occupant to protect them by minimizing the impact applied to the occupant's cervical spine and vertebrae.

The present invention is not limited thereto, and the main chamber may be modified to extend in length vertically to correspond not only to the neck and back of the occupant but also to the waist as needed.

The upper chamber 60 may be connected to an upper end of the main chamber 50 to receive the gas through the main chamber 50, being inflated and deployed.

That is, the upper chamber 60 may be inflated and deployed between the occupant's head and a headrest 12 installed on an upper end of the backrest 11 to absorb impact applied when the occupant's head collides with the headrest 12.

In the upper chamber 60 area, the external panel 42 may have a longer length in at least one of the horizontal or vertical dimensions than the inner panel 41 so that the external panel 42 surrounds the head of the occupant when the upper chamber 60 is deployed.
the pair of side chambers 70 may be connected to both sides of the main chamber 50, respectively, to receive the gas through the main chamber 50, being inflated and deployed.

That is, the pair of side chambers 70 may be inflated and deployed respectively on outer sides of occupant's shoulders and upper arms to restrain and protect the occupant's shoulders and upper arms.

In the pair of side chambers 70 area, the external panel 42 may have a horizontal length longer than that of the inner panel 41 so that the external panel 42 surrounds the occupant's shoulder and upper arms when the side chambers 70 are deployed.

Therefore, the main chamber 50 and the pair of side chambers 70 may be concavely inflated and deployed in an approximately semicircular or arc shape when viewed from above so that a rear surface and side surfaces of the upper body of the occupant are entirely surrounded.

Also, a plurality of tethers (not shown), which limits a deployment shape of each of the chambers 50 to 70 provided in the airbag cushion 40, may be installed between the inner panel 41 and the external panel 42.

For example, one or more tethers defining a deployment shape of the upper chamber 60 may be installed inside or outside the upper chamber 60 so that the upper chamber 60 is inflated and deployed while rotated forward with respect to a lower end thereof.

For this purpose, both ends of the tether may be connected to the main chamber 50 and an upper end of the upper chamber 60.

Also, one or more tethers defining a deployment shape of each side chamber 70 may be installed inside or outside the pair of side chambers 70 so that each side chamber 70 is inflated and deployed while rotated toward the occupant with respect to a portion on which the side chamber 70 is connected to the main chamber 50.

Both ends of the tether may be connected to the main chamber 50 and an outer end of the side chamber 70.

The present invention is not limited thereto, and the number of tethers, positions where the tethers are installed, lengths, widths, and other parameters can be varied.

Additionally, the present invention may provide different horizontal and vertical lengths for the inner and outer panels and, besides applying tethers, may also change the configuration by forming various patterns of seams along the edges and inside of each chamber to limit the deployment shape of each chamber.

As described above, according to the present invention, the occupant may be safely protected by compensating for the space between the occupant and the frontal airbag device, reducing the space upon the vehicle collision.

In addition, according to the present invention, the impact, which occurs when the occupant is rebounded by the frontal airbag inflated and deployed in front of the occupant and collides with the seat, may be effectively absorbed to safely protect the occupant.

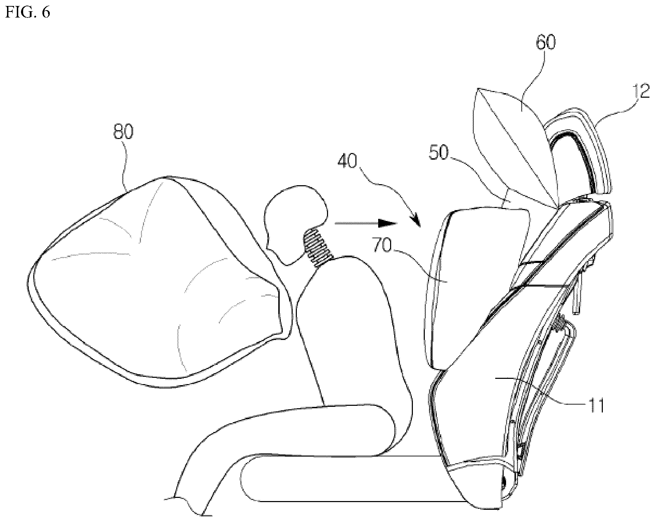

Next, an operating method of the airbag device of the vehicle according to the first embodiment of the present invention will be described in detail with reference to FIG. 6.

FIG. 6 is an operational state view illustrating a state in which the airbag device for the vehicle is operated according to a preferred embodiment of the present invention.

First, the airbag cushion 40 is manufactured in a bag shape by sewing the edges while the inner panel 41 and the external panel 42 are arranged to overlap each other, based on the deployed state shown in FIG. 2.

The manufactured airbag cushion 40 may be accommodated in a folded state within the housing 20 using various rolling or folding methods to minimize the volume, and may be installed into the backrest 11 of the seat, for example, on an upper frontal side of the backrest 11.

In the event of the collision during vehicle operation, the airbag cushion 40 may be inflated and deployed outward from a cover of the backrest 11 by receiving the gas from the inflator 30.

That is, the main chamber 50 may be inflated and deployed in front of the backrest 11, while each of the upper chamber 60 and the pair of side chambers 70 receive gas through the main chamber 50 and is inflated and deployed at the top and both sides of the main chamber 50.

Here, the upper chamber 60 and the pair of side chambers 70 rotate downward and inward toward the occupant around the main chamber 50, entirely surrounding and restraining the occupant.

In this way, each of the chambers 50 to 70 provided in the airbag cushion 40 may be inflated and deployed to entirely surround and restrain the occupant's upper body and head, thereby preventing lateral movement of the occupant and ensuring safety.

In the event of a frontal collision, the occupant moves forward in the vehicle. Therefore, after the occupant is firstly protected by a frontal airbag 80, which is inflated and deployed at the front, the occupant may be rebounded backward due to the pressure of the frontal airbag 80.

At this time, as the airbag cushion 40 is inflated and deployed between the occupant and the backrest 11 and headrest 12, the space between the occupant and the backrest 11 and headrest 12 may be compensated to be reduced, thereby minimizing the impact applied to the rebounding occupant.

In other words, according to the present invention, when the collision occurs with the occupant in a state where the backrest rotates backward, the airbag cushion may be used to compensate for the space between the occupant and the backrest, minimizing the impact applied when the occupant collides with the backrest.

As described above, according to the present invention, the occupant may be safely protected by compensating for the space between the occupant and the frontal airbag device, reducing the space upon the vehicle collision.

In addition, according to the present invention, the impact, which occurs when the occupant is rebounded by the frontal airbag inflated and deployed in front of the occupant and collides with the seat, may be effectively absorbed to safely protect the occupant.

### [Second Embodiment]

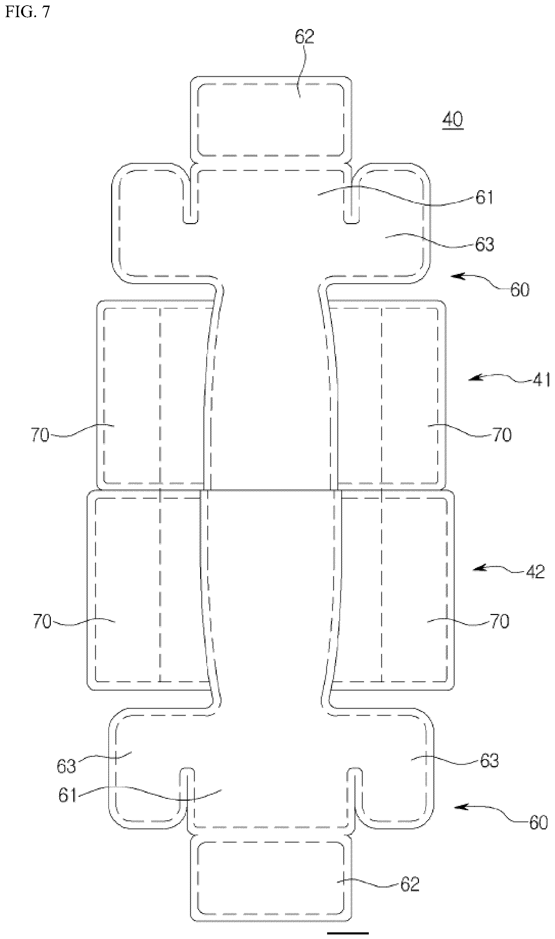

FIG. 7 is an exploded view of an airbag cushion applied to an airbag device for a vehicle according to a second embodiment of the present invention;

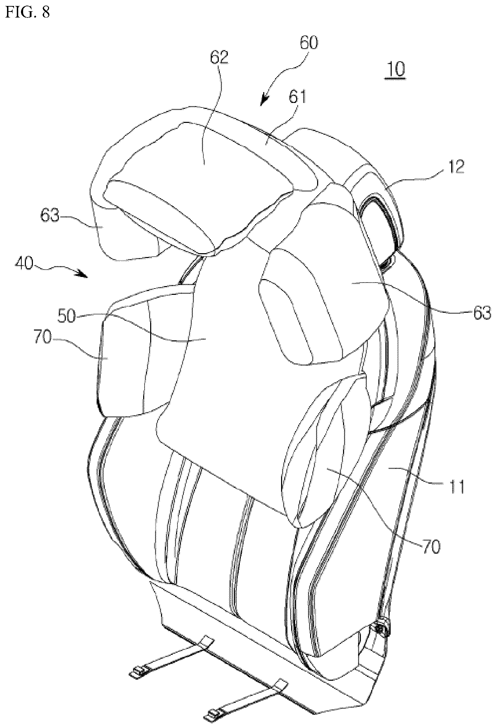

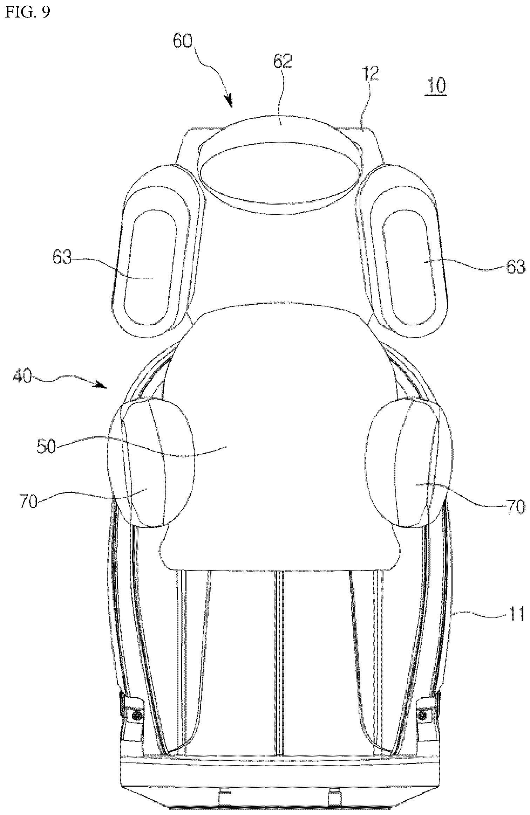

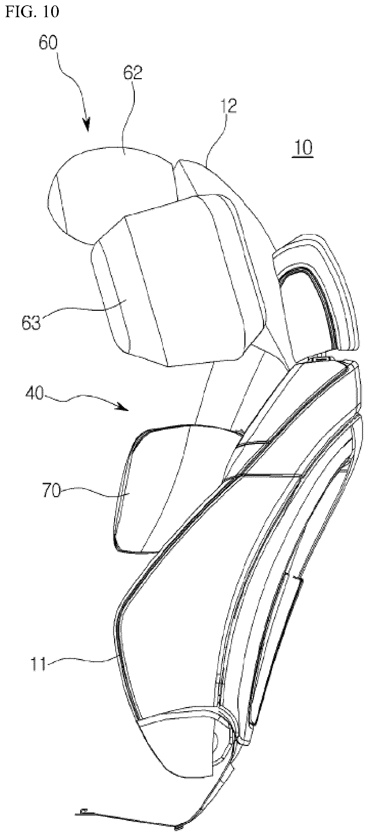

FIGS. 8 to 10 are a perspective view, a front view, and a side view, respectively, illustrating a state in which the airbag cushion shown in FIG. 7 is inflated and deployed.

An airbag device 10 for a vehicle according to the present invention is configured identically to the airbag device of the vehicle described with reference to FIG. 1, except that the shape of the airbag cushion 40 is modified.

More specifically, as shown in FIGS. 7 to 10, an airbag cushion 40 may further include a main chamber 50, which is inflated and deployed toward the occupant's neck and the rear surface of the upper body, and an upper chamber 60, which is inflated and deployed toward the rear surface of the occupant's head, so that the occupant's head and the upper body is surrounded and protected, and a pair of side chambers 70, which is inflated and deployed from both sides of the main chamber 50 toward both side surfaces of the upper body of the occupant to prevent lateral movement of the occupant.

Accordingly, a space in which the upper body including the head, neck and the back of the occupant is entirely accommodated may be defined inside the inflated and deployed airbag cushion 40.

In this embodiment, the upper chamber 60 may extend to surround a top surface and both side surfaces of the occupant's head to restrain lateral movement of the occupant's head or to absorb the impact applied when the occupant's head collides with the headrest 12 while moving backward.

That is, the upper chamber 60 may include a rear surface chamber 61 corresponding to the rear surface of the occupant's head, a top surface chamber 62 that surrounds the top surface of the occupant's head, and a pair of side surface chambers 63 that surround both side surfaces of the head.

The rear chamber 61 may have various shapes, such as approximately polygonal, circular, or elliptical in a cross-section, to correspond to the rear surface of the occupant's head.

The upper chamber 62 may extend from an upper end of the rear surface chamber 61 and inflated and deployed approximately forward.

Here, the upper chamber 62 may be partitioned into a plurality of chambers by chamber walls to be inflated and deployed along the top surface of the occupant's head. For example, the chamber walls may be provided with one or more in parallel along the lateral direction when viewed in FIG. 7.

Therefore, during an initial deployment, the upper chamber 62 may be inclined upward and forward to inflate from an upper end of the rear surface of the occupant's head toward the occupant's crown, and then inclined downward to inflate from the crown of the head toward the forehead.

Additionally, one or more tether members (not shown) may be provided inside or outside the upper chamber 62 to limit a deployment shape of the upper chamber 62.

For instance, the tether members may connect at both ends to front and rear ends of the upper chamber 62, respectively, ensuring that the cross-section of the upper chamber 62 appears a convex shape when viewed from one side.

The upper chamber 62, which is inflated and deployed forward, may have a length that varies to surround the top surface and forehead of the occupant's head, or a portion of an upper end of the face.

The pair of side surface chambers 63 may extend from both ends of the rear surface chamber 61, respectively, and be inflated and deployed approximately forward.

Here, each of the side surface chambers 63 may be partitioned into a plurality of chambers by chamber walls to be inflated and deployed along both side surfaces of the occupant's head. For example, the chamber walls may be provided with one or more in parallel along the lateral direction when viewed in FIG. 7.

Therefore, the side surface chamber 63 may be inflated while inclined forward and outward from both ends of the rear surface of the occupant's head toward both ears of the occupant during the initial deployment, and then be inflated while inclined forward and inward from both ears of the occupant toward a front of the occupant's face.

Additionally, one or more tether members (not shown) may be provided inside or outside the side surface chamber 63 to limit a deployment shape of the side surface chamber 63.

For instance, the tether members may connect at both ends to front and rear ends of the side surface chamber 63, respectively, ensuring that the cross-section of the side surface chamber 63 appears a convex shape, i.e., '()'shape, when viewed from above.

The side chamber 62, which is inflated and deployed forward, may have a length that varies to surround both side surfaces of the occupant's head and a portion of both ends of the face.
the pair of side chambers 70 may be connected to both sides of the main chamber 50, respectively, to receive the gas through the main chamber 50, being inflated and deployed.

That is, the pair of side chambers 70 may be inflated and deployed respectively on outer sides of occupant's shoulders and upper arms to restrain and protect the occupant's shoulders and upper arms.

In the pair of side chambers 70 area, the external panel 42 may have a horizontal length longer than that of the inner panel 41 so that the external panel 42 surrounds the occupant's shoulder and upper arms when the side chambers 70 are deployed.

Therefore, the main chamber 50 and the pair of side chambers 70 may be concavely inflated and deployed in an approximately semicircular or arc shape when viewed from above so that a rear surface and side surfaces of the upper body of the occupant are entirely surrounded.

Also, a plurality of tethers (not shown), which limits a deployment shape of each of the chambers 50 to 70 provided in the airbag cushion 40, may be installed between the inner panel 41 and the external panel 42.

For example, one or more tether members defining a deployment shape of each side chamber 70 may be installed inside or outside the pair of side chambers 70 so that each side chamber 70 is inflated and deployed while rotated toward the occupant with respect to a portion on which the side chamber 70 is connected to the main chamber 50.

Both ends of the tether member may be connected to the main chamber 50 and an outer end of the side chamber 70.

The present invention is not limited thereto, and the number of tethers, positions where the tethers are installed, lengths, widths, can be varied.

Additionally, the present invention may provide different horizontal and vertical lengths for the inner and outer panels and, besides applying tethers, may also change the configuration by forming various patterns of seams along the edges and inside of each chamber to define the deployment shape of each chamber.

As described above, according to the present invention, the occupant may be safely protected by compensating for the space between the occupant and the frontal airbag device, reducing the space upon a vehicle collision.

In addition, according to the present invention, the impact, which occurs when the occupant is rebounded by the frontal airbag inflated and deployed in front of the occupant and collides with the seat, may be effectively absorbed to safely protect the occupant.

Moreover, according to the present invention, the top surface and both side surfaces of the occupant's head may be restrained by the upper chamber, which is inflated around the head of the occupant, to safely protect the occupant.

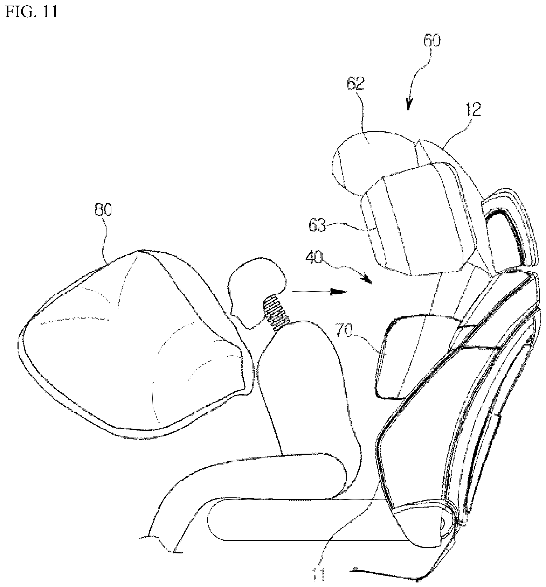

Next, an operating method of the airbag device for the vehicle according to a second embodiment of present invention will be described in detail with reference to FIG. 11.

FIG. 11 is an operational state view illustrating a state in which the airbag device for the vehicle is operated according to second embodiment of the present invention.

First, an airbag cushion 40 is manufactured in a bag shape by sewing the edges while an inner panel 41 and an external panel 42 are arranged to overlap each other, based on the deployed state shown in FIG. 7.

The manufactured airbag cushion 40 may be accommodated in a folded state within a housing 20 using various rolling or folding methods to minimize the volume, and may be installed into a backrest 11 of the seat, for example, on an upper frontal side of the backrest 11.

In the event of a collision during vehicle operation, the airbag cushion 40 may be inflated and deployed outward from a cover of the backrest 11 by receiving the gas from an inflator 30.

That is, a main chamber 50 may be inflated and deployed in front of the backrest 11, while each of an upper chamber 60 and a pair of side chambers 70 receive gas through the main chamber 50 and is inflated and deployed at the top and both sides of the main chamber 50.

Here, the upper chamber 60 and the pair of side chambers 70 rotate downward and inward toward the occupant around the main chamber 50, entirely surrounding and restraining the occupant.

For example, a rear surface chamber 61 of the upper chamber 60 may be inflated and deployed between the occupant's head and a headrest 12 to absorb an impact applied when the occupant's head collides with the headrest 12 due to the collision.

Also, a top surface chamber 62 and a pair of side surface chambers 63 of the upper chamber 60 may be inflated and deployed forward along a top surface and both side surfaces of the occupant's head, respectively. Therefore, the upper chamber 60 may restrain not only the rear surface of the occupant's head but also the top surface and both side surface of the occupant's head to prevent the occupant's head from laterally moving, thereby effectively protecting occupant from the impact applied from the outside.

Also, the pair of side chambers 70 may surround and restrain both side surfaces of an upper body of the occupant.

In this way, each of the chambers 50 to 70 provided in the airbag cushion 40 may be inflated and deployed to entirely surround and restrain the occupant's upper body and head, thereby preventing lateral movement of the occupant and ensuring safety.

In the event of a frontal collision, the occupant moves forward in the vehicle. Therefore, after the occupant is firstly protected by a frontal airbag 80, which is inflated and deployed at the front, the occupant may be rebounded backward due to the pressure of the frontal airbag 80.

At this time, as the airbag cushion 40 is inflated and deployed between the occupant and the backrest 11 and headrest 12, the space between the occupant and the backrest 11 and headrest 12 may be compensated to be reduced, thereby minimizing the impact applied to the rebounding occupant.

In other words, according to the present invention, when a collision occurs with the occupant in a state where the backrest is rotated backward, the airbag cushion may be used to compensate for the space between the occupant and the backrest, minimizing the impact applied when the occupant collides with the backrest.

As described above, according to the present invention, the occupant may be safely protected by compensating for the space between the occupant and the frontal airbag device, reducing the space upon the vehicle collision.

In addition, according to the present invention, the impact, which occurs when the occupant is rebounded by the frontal airbag inflated and deployed in front of the occupant and collides with the seat, may be effectively absorbed to safely protect the occupant.

Moreover, according to the present invention, the top surface and both side surfaces of the occupant's head may be restrained by the upper chamber, which is inflated around the head of the occupant, to safely protect the occupant.

Although the invention made by the inventors of the present application has been specifically described according to the above embodiments, the present disclosure is not limited to the above embodiments, and may be modified variously within a scope of the technical essence of the disclosure.

### Industrial Applicability

The present invention may be applied to a technology in which the space between the occupant and the frontal airbag device may be compensated to be reduced, thereby safely protecting the occupant upon the vehicle collision.

## Claims

1. An airbag device for a vehicle, the airbag device comprising:
a housing installed in a backrest of a seat;
an inflator configured to generate a gas upon ignition by a detection signal of an impact detection sensor in the event of vehicle collision; and
an airbag cushion accommodated in the housing in a rolled or folded state to receive the gas generated from the inflator upon the vehicle collision, thereby being inflated and
deployed to surround an upper body and a head of an occupant,
wherein the airbag cushion compensates a distance between the occupant and the backrest upon the vehicle collision and is inflated and deployed from the backrest toward a rear surface of the occupant so as to prevent the occupant, who is rebounded by a frontal airbag,
from being injured due to collision with the backrest.

2. The airbag device of claim 1, wherein the airbag cushion comprises:
a main chamber, which is inflated and deployed toward a rear surface of a neck and the upper body of the occupant; and
an upper chamber, which is inflated and deployed from an upper portion of the main chamber toward the rear surface of the occupant's head,
wherein the upper chamber receives the gas from the main chamber and is inflated and
deployed downward with respect to a portion to which the main chamber is connected so as to surround the occupant's head.

3. The airbag device of claim 2, wherein the upper chamber comprises:
a rear surface chamber, which corresponds to the rear surface of the occupant's head;
a top surface chamber, which surrounds a top surface of the occupant's head; and
a pair of side surface chambers, which surrounds both side surfaces of the occupant's head.

4. The airbag device of claim 3, wherein the top surface chamber receives the gas from the main chamber and is inflated and deployed forward along the top surface of the occupant's head with respect to a portion to which the main chamber is connected so as to surround the occupant's head, and
the pair of side surface chambers receives the gas from the main chamber and is inflated and deployed forward along both side surfaces of the occupant's head with respect to the portion to which the main chamber is connected.

5. The airbag device of claim 2, wherein the airbag cushion is inflated from the backrest toward a rear surface of the occupant and inflated and deployed forward along both side surfaces of the occupant upon the vehicle collision.

6. The airbag device of claim 5, wherein the airbag cushion further comprises a pair of side chambers, which are inflated and deployed from both sides of the main chamber toward both side surfaces of the upper body of the occupant to prevent the occupant from laterally moving.

7. The airbag device of claim 6, wherein the pair of side chambers rotate inward toward the occupant with respect to a portion to which the main chamber is connected so as to be inflated and deployed.

8. The airbag device of claim 7, wherein each of the upper chamber and the pair of side chambers receive the gas generated from the inflator through the main chamber so as to be inflated and deployed.

9. The airbag device of claim 2, wherein each of the chambers provided in the airbag cushion has a deployment shape that is limited by one or more tether members installed inside or outside the chamber.

10. The airbag device of claim 9, wherein the airbag cushion is manufactured in a bag shape by sewing an inner panel that is in contact with the occupant, with an external panel disposed at the opposite side of the occupant, and
the external panel of each chamber has a length, in at least one of horizontal and vertical dimensions, longer than that of the inner panel of each chamber.
